# FASCICULE DE BREVET EUROPEEN

(11) **EP 3 195 553 B1**
(45) Date de publication et mention de la délivrance du brevet: **12.12.2018**
(21) Numéro de dépôt: 15753970.1
(22) Date de dépôt: 23.07.2015
(51) Int. Cl.: H04L 29/06, H04W 12/06, G06F 21/31

(54) **PROCÉDÉ D'APPAIRAGE ENTRE UN APPAREIL MOBILE ET UN MODULE ÉLECTRONIQUE D'UN VÉHICULE**
PAARUNGSVERFAHREN ZWISCHEN EINER MOBILEN VORRICHTUNG UND EINEM ELEKTRONISCHEN MODUL EINES FAHRZEUGS
PAIRING METHOD BETWEEN A MOBILE DEVICE AND AN ELECTRONIC MODULE OF A VEHICLE

(30) Priorité: 23.07.2014 FR 1401677
(43) Date de publication de la demande: 26.07.2017
(73) Titulaire: Valeo Comfort and Driving Assistance, 94046 Créteil Cedex (FR)
(72) Inventeur: LECONTE, Eric, F-94046 Créteil CEDEX (FR)
(74) Mandataire: Delplanque, Arnaud
(86) Numéro de dépôt international: PCT/FR2015/052037
(87) Numéro de publication internationale: WO 2016/012723

(56) Documents cités:
- WO-A2-2014/014945
- US-B2- 8 626 144

## Description

### DOMAINE TECHNIQUE DE L'INVENTION

Le domaine technique de l'invention est celui des véhicules automobiles et plus particulièrement celui des véhicules dont l'accès est réalisé au moyen d'un appareil mobile. L'invention se rapporte ainsi à un procédé d'appairage entre un appareil mobile et un module électronique d'un véhicule.

On entend par appareil mobile tout dispositif permettant à une personne d'accéder à des données et informations peu importe l'endroit où cette personne se trouve. Sont regroupés dans cette catégorie notamment les téléphones mobiles, et plus particulièrement les smartphones, les ordinateurs portables, les tablettes numériques, les assistants numériques personnels (ou « PDAs »).

### ARRIERE-PLAN TECHNOLOGIQUE DE L'INVENTION

Un utilisateur peut aujourd'hui contrôler l'exécution d'une fonction d'un véhicule au moyen d'un appareil mobile, comme par exemple un smartphone. La fonction concernée est par exemple une fonction parmi les suivantes : verrouillage/déverrouillage du véhicule, démarrage du véhicule, parking automatique... Dans certaines applications, afin de pouvoir mettre en oeuvre une de ces fonctions, l'appareil mobile doit avoir préalablement mémorisé une clé d'identification autorisant l'exécution d'au moins une fonction du véhicule. La mémorisation de la clé d'identification s'effectue dans un élément sécurisé de l'appareil mobile, par exemple sa carte SIM. L'utilisateur, en conservant l'appareil mobile sur lui, peut ainsi par exemple déverrouiller la serrure d'un ouvrant du véhicule. Pour ce faire, des données, notamment des données d'authentification contenues dans la clé d'identification, sont échangées entre l'appareil mobile et un module électronique du véhicule qui détermine si la clé d'identification du véhicule est valide. Dans des modes de mise en oeuvre avantageux, ces échanges de données sont réalisés en respectant le protocole BLE (Bluetooth Low Energy).

Le document US 8 626 144, 7 janvier 2014 (2014-01-07), décrit un procédé permettant des communications entre un dispositif de communication maître Bluetooth Low Energy, BLE, dans un véhicule et un dispositif de communication esclave.

Par ailleurs, les véhicules d'aujourd'hui sont équipés de manière à pouvoir utiliser l'appareil mobile en mode dit mains libres, l'appareil mobile communiquant avec le module électronique du véhicule selon le protocole Bluetooth, ou selon le protocole wifi. L'utilisateur peut ainsi, par exemple, répondre, au moyen de commandes du véhicule, à un appel téléphonique. La conversation téléphonique est alors diffusée sur les haut-parleurs du véhicule. Avant de pouvoir établir cette communication Bluetooth ou wifi, l'utilisateur doit préalablement et manuellement enregistrer dans le module électronique du véhicule, un premier code d'identification Bluetooth ou wifi associé à l'appareil mobile. De la même manière, l'utilisateur doit enregistrer dans l'appareil mobile, un second code d'identification Bluetooth ou wifi associé au module électronique du véhicule.

Ces manipulations sont fastidieuses, coûteuses en termes de temps, particulièrement dans le cas où l'utilisateur est en présence d'un véhicule qu'il ne connaît pas, comme par exemple un véhicule de location. En effet, lorsque l'utilisateur loue un véhicule, il n'a pas forcément le temps ni l'envie de chercher comment effectuer de telles manipulations.

### RESUME DE L'INVENTION

Le procédé selon l'invention propose une solution au problème qui vient d'être exposé. Dans l'invention on propose une solution pour faciliter, du point de vue de l'utilisateur, l'appairage de l'appareil mobile et du module électronique du véhicule : à cet effet, on prévoit dans l'invention d'échanger, avantageusement de manière réciproque, entre l'appareil mobile et le véhicule, le code d'identification associé à l'appareil mobile et le code d'identification associé au module du véhicule.

L'invention concerne donc essentiellement un procédé d'appairage entre un appareil mobile et un module électronique d'un véhicule, ledit procédé comportant une étape d'authentification initiale de l'appareil mobile auprès du module électronique du véhicule, l'étape d'authentification initiale étant réalisée selon un premier mode de communication, caractérisé en ce que le procédé comporte une étape consistant à échanger selon le premier mode de communication, entre l'appareil mobile et le module électronique du véhicule, un premier code d'identification et un second code d'identification associés respectivement à l'appareil mobile et au module électronique du véhicule, le premier code d'identification et le second code d'identification autorisant l'appareil mobile et le module électronique du véhicule à communiquer entre eux selon un second mode de communication, le second mode de communication étant différent du premier mode de communication.

Le procédé selon l'invention peut comporter, en plus des caractéristiques principales qui viennent d'être mentionnées dans le paragraphe précédent, une ou plusieurs caractéristiques parmi les suivantes considérées individuellement ou selon les combinaisons techniquement possibles :
- le premier mode de communication est le protocole Bluetooth Low Energy ;
- le second mode de communication est le protocole Bluetooth ou le protocole wifi;
- l'étape consistant à échanger entre l'appareil mobile et le module électronique du véhicule le premier code d'identification et le second code d'identification comporte les différentes opérations consistant à :
   o émettre, depuis l'appareil mobile vers le module électronique du véhicule, le premier code d'identification associé à l'appareil mobile et mémoriser dans le module électronique du véhicule le premier code d'identification ;
   o émettre, depuis le module électronique du véhicule vers l'appareil mobile, le second code d'identification associé au module électronique du véhicule et mémoriser dans l'appareil mobile le second code d'identification ;
- le procédé comporte une étape supplémentaire consistant à activer automatiquement le second mode de communication sur l'appareil mobile lors de l'étape d'authentification initiale ou lors d'une étape d'authentification ultérieure de l'appareil mobile auprès du module électronique du véhicule, l'étape d'authentification ultérieure intervenant pour la mise en oeuvre d'une fonction du véhicule nécessitant un échange de données selon le premier mode de communication ;
- l'étape consistant à activer automatiquement le second mode de communication sur l'appareil mobile comporte une opération consistant à émettre depuis le module électronique du véhicule vers l'appareil mobile, selon le premier mode de communication, un message forçant l'activation du second mode de communication sur l'appareil mobile ;
- l'étape d'authentification initiale de l'appareil mobile auprès du module électronique du véhicule est réalisée au moyen d'une clé d'identification mémorisée dans l'appareil mobile ;
- la clé d'identification est une clé d'identification temporaire et le procédé comporte une étape supplémentaire consistant à effacer, après expiration de la clé d'identification temporaire, au moins le premier code d'identification mémorisé dans le module électronique du véhicule ;
- l'étape consistant à échanger selon le premier mode de communication, entre l'appareil mobile et le module électronique du véhicule, le premier code d'identification et le second code d'identification est réalisée suite à l'étape d'authentification initiale ;
- l'étape consistant à échanger selon le premier mode de communication, entre l'appareil mobile et le module électronique du véhicule, le premier code d'identification et le second code d'identification est réalisée suite à l'étape d'authentification ultérieure.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, une représentation schématique d'un exemple de contexte de mise en oeuvre du procédé selon l'invention ;
- à la figure 2, un diagramme fonctionnel d'un mode de mise en oeuvre du procédé selon l'invention.

### DESCRIPTION DETAILLE

L'invention a notamment pour objet de proposer un procédé destiné à appairer un appareil mobile et un module électronique d'un véhicule.

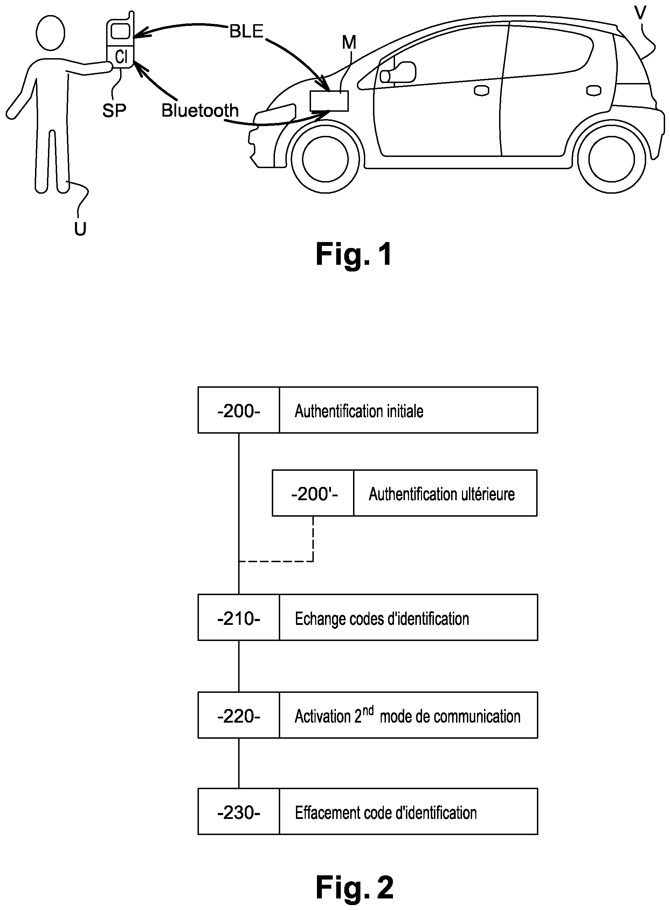

Les figures 1 et 2 sont décrites conjointement.

La figure 1 représente schématiquement un exemple de contexte de mise en oeuvre du procédé selon l'invention. La figure 1 montre un véhicule V comportant un module électronique M ainsi qu'un utilisateur U muni d'un appareil mobile SP. Le module électronique M du véhicule V et l'appareil mobile SP sont aptes à échanger des données entre eux selon le protocole Bluetooth Low Energy et selon le protocole Bluetooth ou selon le protocole wifi.

Le procédé selon l'invention peut s'appliquer à tout type d'appareil mobile tel qu'un smartphone, un ordinateur portable, une tablette numérique ou un assistant numérique personnel (PDA).

Dans l'exemple illustré au moyen de la figure 1, une clé d'identification CI est mémorisée dans l'appareil mobile SP. Une étape d'authentification initiale 200 consistant en un échange, selon le protocole BLE, de données d'authentification contenues dans la clé d'identification, entre l'appareil mobile SP et le module électronique M du véhicule V, permet à ces deux équipements de pouvoir s'identifier ultérieurement mutuellement. L'étape d'authentification initiale 200 est réalisée la première fois que l'utilisateur U souhaite exécuter une fonction particulière du véhicule V, comme par exemple le verrouillage-déverrouillage d'un ouvrant du véhicule V ou bien le démarrage du véhicule V. Dans d'autres cas, l'étape d'authentification initiale 200 est réalisée dès que l'utilisateur U arrive à proximité - c'est-à-dire à une distance de l'ordre de un à trois mètres - du véhicule V

Une fois l'appareil mobile SP authentifié par le module électronique M du véhicule V, il est possible d'établir de manière automatique un échange de données entre ces deux éléments selon le protocole BLE. Ainsi, au cours d'une étape d'authentification ultérieure 200', une opération d'échange de données, selon le protocole BLE, entre l'appareil mobile SP et le module électronique M du véhicule V est réalisée mais la quantité de données échangées est moins importante que dans l'étape d'authentification initiale 200, l'appareil mobile SP et le module électronique M du véhicule V s'étant préalablement identifiés selon le protocole BLE.

Comme illustré à la figure 2, à la suite de l'étape d'authentification initiale 200, on procède à une étape d'échange 210, avantageusement selon le protocole BLE, d'un premier code d'identification Bluetooth ou wifi associé à l'appareil mobile SP et d'un second code d'identification associé au module électronique M du véhicule V. Dans un autre exemple de mise en oeuvre du procédé selon l'invention, l'étape d'échange 210 peut être réalisée à la suite de l'étape d'authentification ultérieure 200', intervenant chaque fois que l'utilisateur U souhaite de nouveau exécuter une des fonctions particulières citées plus haut du véhicule V, ladite fonction nécessitant un échange de données selon le protocole BLE.

Afin de réaliser l'étape d'échange 210, l'appareil mobile SP émet vers le module électronique M du véhicule V le premier code d'identification et le module électronique M du véhicule V mémorise le premier code d'identification. De même, le module électronique M du véhicule V émet vers l'appareil mobile SP le second code d'identification et l'appareil mobile SP mémorise le second code d'identification.

Une fois l'échange du premier code d'identification et du second code d'identification réalisé, on procède à une étape d'activation automatique 220 du mode de communication Bluetooth ou wifi sur l'appareil mobile SP, l'utilisateur U n'ayant ainsi pas à le faire manuellement. Au cours de cette étape, avantageusement, le module électronique M du véhicule V émet vers l'appareil mobile SP selon le protocole BLE un message forçant l'activation du mode de communication Bluetooth ou wifi sur l'appareil mobile SP.

On considère maintenant que le véhicule V est un véhicule partagé par une pluralité d'utilisateurs, comme par exemple un véhicule de location. La clé d'identification Cl mémorisée dans l'appareil mobile SP est alors une clé d'identification temporaire. Lorsque la durée de validité de la clé d'identification temporaire expire, on procède à une étape d'effacement 230 du premier code d'identification mémorisé dans le module électronique M du véhicule V. Ainsi lorsque l'utilisateur U a restitué le véhicule V, une personne malintentionnée ne peut pas récupérer le code d'identification de l'appareil mobile SP de l'utilisateur U pour ensuite s'en servir afin d'accéder à des données personnelles de l'utilisateur U contenues dans son appareil mobile SP.

Dans un autre exemple de mise en oeuvre du procédé selon l'invention, au cours de l'étape d'effacement 230, on peut effacer à la fois le premier code d'identification mémorisé dans le module électronique M du véhicule V et le second code d'identification mémorisé dans l'appareil mobile SP.

Ainsi, grâce au procédé selon l'invention, l'utilisateur U n'a plus à se préoccuper d'effectuer manuellement l'appairage entre son appareil mobile SP et le module électronique M du véhicule V, ni d'activer le mode de communication Bluetooth ou wifi sur son appareil mobile SP. L'utilisateur U accède ainsi automatiquement, depuis les équipements du véhicule V, via le protocole Bluetooth ou wifi, à différents fonctionnalités disponibles sur son appareil mobile SP (calcul d'itinéraires, accès à la musique mémorisée dans l'appareil mobile...).

## Revendications

1. Procédé d'appairage entre un appareil mobile (SP) et un module électronique (M) d'un véhicule (V), ledit procédé comportant une étape d'authentification initiale (200) de l'appareil mobile (SP) auprès du module électronique (M) du véhicule (V), l'étape d'authentification initiale (200) étant réalisée selon un premier mode de communication, **caractérisé en ce que** le procédé comporte une étape (210) consistant à échanger selon le premier mode de communication, entre l'appareil mobile (SP) et le module électronique (M) du véhicule (V), un premier code d'identification et un second code d'identification associés respectivement à l'appareil mobile (SP) et au module électronique (M) du véhicule (V), le premier code d'identification et le second code d'identification autorisant l'appareil mobile (SP) et le module électronique (M) du véhicule (V) à communiquer entre eux selon un second mode de communication, le second mode de communication étant différent du premier mode de communication.

2. Procédé selon la revendication précédente **caractérisé en ce que** le premier mode de communication est le protocole Bluetooth Low Energy.

3. Procédé selon l'une quelconque des revendications précédentes **caractérisé en ce que** le second mode de communication est le protocole Bluetooth ou le protocole wifi.

4. Procédé selon l'une quelconque des revendications précédentes **caractérisé en ce que** l'étape (210) consistant à échanger entre l'appareil mobile (SP) et le module électronique (M) du véhicule (V) le premier code d'identification et le second code d'identification comporte les différentes opérations consistant à :
- émettre, depuis l'appareil mobile (SP) vers le module électronique (M) du véhicule (V), le premier code d'identification associé à l'appareil mobile (SP) et mémoriser dans le module électronique (M) du véhicule (V) le premier code d'identification ;
- émettre, depuis le module électronique (M) du véhicule (V) vers l'appareil mobile (SP), le second code d'identification associé au module électronique (M) du véhicule (V) et mémoriser dans l'appareil mobile (SP) le second code d'identification.

5. Procédé selon la revendication précédente **caractérisé en ce qu'**il comporte une étape supplémentaire (220) consistant à activer automatiquement le second mode de communication sur l'appareil mobile (SP) lors de l'étape d'authentification initiale (200) ou lors d'une étape d'authentification ultérieure (200') de l'appareil mobile (SP) auprès du module électronique (M) du véhicule (V), l'étape d'authentification ultérieure (200') intervenant pour la mise en oeuvre d'une fonction du véhicule (V) nécessitant un échange de données selon le premier mode de communication.

6. Procédé selon la revendication précédente **caractérisé en ce que** l'étape (220) consistant à activer automatiquement le second mode de communication sur l'appareil mobile (SP) comporte une opération consistant à émettre depuis le module électronique (M) du véhicule (V) vers l'appareil mobile (SP), selon le premier mode de communication, un message forçant l'activation du second mode de communication sur l'appareil mobile (SP).

7. Procédé selon l'une quelconque des revendications précédentes **caractérisé en ce que** l'étape d'authentification initiale (200) de l'appareil mobile (SP) auprès du module électronique (M) du véhicule (V) est réalisée au moyen d'une clé d'identification (Cl) mémorisée dans l'appareil mobile (SP).

8. Procédé selon la revendication précédente **caractérisé en ce que** la clé d'identification (Cl) est une clé d'identification temporaire et **en ce que** le procédé comporte une étape supplémentaire (230) consistant à effacer, après expiration de la clé d'identification temporaire, au moins le premier code d'identification mémorisé dans le module électronique (M) du véhicule (V).

9. Procédé selon l'une quelconque des revendications précédentes **caractérisé en ce que** l'étape (210) consistant à échanger selon le premier mode de communication, entre l'appareil mobile (SP) et le module électronique (M) du véhicule (V), le premier code d'identification et le second code d'identification est réalisée suite à l'étape d'authentification initiale (200).

10. Procédé selon l'une quelconque des revendications 1 à 8 **caractérisé en ce que** l'étape (210) consistant à échanger selon le premier mode de communication, entre l'appareil mobile (SP) et le module électronique (M) du véhicule (V), le premier code d'identification et le second code d'identification est réalisée suite à l'étape d'authentification ultérieure (200').

## Patentansprüche

1. Verfahren zur Paarung einer mobilen Vorrichtung (SP) und eines elektronischen Moduls (M) eines Fahrzeugs (V), wobei das Verfahren einen Schritt der anfänglichen Authentifizierung (200) der mobilen Vorrichtung (SP) bei dem elektronischen Modul (M) des Fahrzeugs (V) umfasst, wobei der Schritt der anfänglichen Authentifizierung (200) gemäß einem ersten Kommunikationsmodus durchgeführt wird, **dadurch gekennzeichnet, dass** das Verfahren einen Schritt (210) umfasst, der darin besteht, gemäß dem ersten Kommunikationsmodus zwischen der mobilen Vorrichtung (SP) und dem elektronischen Modul (M) des Fahrzeugs (V) einen ersten Identifikationscode und einen zweiten Identifikationscode auszutauschen, die der mobilen Vorrichtung (SP) bzw. dem elektronischen Modul (M) des Fahrzeugs (V) zugeordnet sind, wobei der erste Identifikationscode und der zweite Identifikationscode die mobile Vorrichtung (SP) und das elektronische Modul (M) des Fahrzeugs (V) berechtigen, gemäß einem zweiten Kommunikationsmodus miteinander zu kommunizieren, wobei der zweite Kommunikationsmodus von dem ersten Kommunikationsmodus verschieden ist.

2. Verfahren nach dem vorhergehenden Anspruch, **dadurch gekennzeichnet, dass** der erste Kommunikationsmodus das Bluetooth-Low-Energy-Protokoll ist.

3. Verfahren nach einem der vorhergehenden Ansprüche, **dadurch gekennzeichnet, dass** der zweite Kommunikationsmodus das Bluetooth-Protokoll oder das WiFi-Protokoll ist.

4. Verfahren nach einem der vorhergehenden Ansprüche, **dadurch gekennzeichnet, dass** der Schritt (210), der darin besteht, zwischen der mobilen Vorrichtung (SP) und dem elektronischen Modul (M) des Fahrzeugs (V) den ersten Identifikationscode und den zweiten Identifikationscode auszutauschen, die verschiedenen Arbeitsschritte aufweist, die darin bestehen,
- von der mobilen Vorrichtung (SP) an das elektronische Modul (M) des Fahrzeugs (V) den ersten Identifikationscode zu senden, welcher der mobilen Vorrichtung (SP) zugeordnet ist, und in dem elektronischen Modul (M) des Fahrzeugs (V) den ersten Identifikationscode zu speichern;
- von dem elektronischen Modul (M) des Fahrzeugs (V) an die mobile Vorrichtung (SP) den zweiten Identifikationscode zu senden, welcher dem elektronischen Modul (M) des Fahrzeugs (V) zugeordnet ist, und in der mobilen Vorrichtung (SP) den zweiten Identifikationscode zu speichern.

5. Verfahren nach dem vorhergehenden Anspruch, **dadurch gekennzeichnet, dass** es einen zusätzlichen Schritt (220) umfasst, der darin besteht, im Schritt der anfänglichen Authentifizierung (200) oder in einem Schritt der späteren Authentifizierung (200') der mobilen Vorrichtung (SP) bei dem elektronischen Modul (M) des Fahrzeugs (V) automatisch den zweiten Kommunikationsmodus an der mobilen Vorrichtung (SP) zu aktivieren, wobei der Schritt der späteren Authentifizierung (200') für die Ausführung einer Funktion des Fahrzeugs (V) eingefügt wird, die einen Austausch von Daten gemäß dem ersten Kommunikationsmodus erfordert.

6. Verfahren nach dem vorhergehenden Anspruch, **dadurch gekennzeichnet, dass** der Schritt (220), der darin besteht, automatisch den zweiten Kommunikationsmodus an der mobilen Vorrichtung (SP) zu aktivieren, einen Arbeitsschritt aufweist, der darin besteht, von dem elektronischen Modul (M) des Fahrzeugs (V) an die mobile Vorrichtung (SP) gemäß dem ersten Kommunikationsmodus eine Nachricht zu senden, welche die Aktivierung des zweiten Kommunikationsmodus an der mobilen Vorrichtung (SP) bewirkt.

7. Verfahren nach einem der vorhergehenden Ansprüche, **dadurch gekennzeichnet, dass** der Schritt der anfänglichen Authentifizierung (200) der mobilen Vorrichtung (SP) bei dem elektronischen Modul (M) des Fahrzeugs (V) mittels eines Identifikationsschlüssels (CI) durchgeführt wird, der in der mobilen Vorrichtung (SP) gespeichert ist.

8. Verfahren nach dem vorhergehenden Anspruch, **dadurch gekennzeichnet, dass** der Identifikationsschlüssel (CI) ein temporärer Identifikationsschlüssel ist, und dadurch, dass das Verfahren einen zusätzlichen Schritt (230) umfasst, der darin besteht, nach Ablauf des temporären Identifikationsschlüssels wenigstens den ersten Identifikationscode zu löschen, der in dem elektronischen Modul (M) des Fahrzeugs (V) gespeichert ist.

9. Verfahren nach einem der vorhergehenden Ansprüche, **dadurch gekennzeichnet, dass** der Schritt (210), der darin besteht, gemäß dem ersten Kommunikationsmodus zwischen der mobilen Vorrichtung (SP) und dem elektronischen Modul (M) des Fahrzeugs (V) den ersten Identifikationscode und den zweiten Identifikationscode auszutauschen, im Anschluss an den Schritt der anfänglichen Authentifizierung (200) ausgeführt wird.

10. Verfahren nach einem der Ansprüche 1 bis 8, **dadurch gekennzeichnet, dass** der Schritt (210), der darin besteht, gemäß dem ersten Kommunikationsmodus zwischen der mobilen Vorrichtung (SP) und dem elektronischen Modul (M) des Fahrzeugs (V) den ersten Identifikationscode und den zweiten Identifikationscode auszutauschen, im Anschluss an den Schritt der späteren Authentifizierung (200') ausgeführt wird.

## Claims

1. Method for pairing between a mobile apparatus (SP) and an electronic module (M) of a vehicle (V), said method including an initial authentication step (200) for authenticating the mobile apparatus (SP) to the electronic module (M) of the vehicle (V), the initial authentication step (200) being performed using a first communication mode, **characterized in that** the method includes a step (210) of exchanging a first identification code and a second identification code that are associated with the mobile apparatus (SP) and with the electronic module (M) of the vehicle (V), respectively, between the mobile apparatus (SP) and the electronic module (M) of the vehicle (V) using the first communication mode, the first identification code and the second identification code authorizing the mobile apparatus (SP) and the electronic module (M) of the vehicle (V) to communicate with one another using a second communication mode, the second communication mode being different from the first communication mode.

2. Method according to the preceding claim, **characterized in that** the first communication mode is the Bluetooth Low Energy protocol.

3. Method according to either one of the preceding claims, **characterized in that** the second communication mode is the Bluetooth protocol or the Wi-Fi protocol.

4. Method according to any one of the preceding claims, **characterized in that** the step (210) of exchanging the first identification code and the second identification code between the mobile apparatus (SP) and the electronic module (M) of the vehicle (V) includes various operations of:
- sending the first identification code associated with the mobile apparatus (SP) from the mobile apparatus (SP) to the electronic module (M) of the vehicle (V) and storing the first identification code in the electronic module (M) of the vehicle (V) ;
- sending the second identification code associated with the electronic module (M) of the vehicle (V) from the electronic module (M) of the vehicle (V) to the mobile apparatus (SP) and storing the second identification code in the mobile apparatus (SP).

5. Method according to the preceding claim, **characterized in that** it includes an additional step (220) of automatically activating the second communication mode on the mobile apparatus (SP) in the initial authentication step (200) or in a subsequent authentication step (200') for authenticating the mobile apparatus (SP) to the electronic module (M) of the vehicle (V), the intervening subsequent authentication step (200'), in order to implement a function of the vehicle (V), requiring an exchange of data using the first communication mode.

6. Method according to the preceding claim, **characterized in that** the step (220) of automatically activating the second communication mode on the mobile apparatus (SP) includes an operation of sending a message forcing the activation of the second communication mode on the mobile apparatus (SP) from the electronic module (M) of the vehicle (V) to the mobile apparatus (SP) using the first communication mode.

7. Method according to any one of the preceding claims, **characterized in that** the initial authentication step (200) for authenticating the mobile apparatus (SP) to the electronic module (M) of the vehicle (V) is performed by way of an identification key (CI) stored in the mobile apparatus (SP).

8. Method according to the preceding claim, **characterized in that** the identification key (CI) is a temporary identification key, and **in that** the method includes an additional step (230) of deleting at least the first identification code stored in the electronic module (M) of the vehicle (V) after the temporary identification key has expired.

9. Method according to any one of the preceding claims, **characterized in that** the step (210) of exchanging the first identification code and the second identification code between the mobile apparatus (SP) and the electronic module (M) of the vehicle (V) using the first communication mode is performed following the initial authentication step (200).

10. Method according to any one of Claims 1 to 8, **characterized in that** the step (210) of exchanging the first identification code and the second identification code between the mobile apparatus (SP) and the electronic module (M) of the vehicle (V) using the first communication mode is performed following the subsequent authentication step (200').
